# EUROPEAN PATENT SPECIFICATION

(11) **EP 2 679 491 B1**
(45) Date of publication and mention of the grant of the patent: **14.10.2015**
(21) Application number: 12190518.6
(22) Date of filing: 30.10.2012
(51) Int. Cl.: B64C 27/12, C10M 125/02, F16H 57/04, C10M 171/06

(54) **Aircraft gearbox lubrication system and method of lubricating an aircraft gearbox**
Flugzeuggetriebe-Schmiersystem und Verfahren zur Schmierung eines Flugzeuggetriebes
Système de lubrification de boîte de vitesses d'aéronef et méthode de lubrification d'une boîte de vitesses d'aéronef

(30) Priority: 29.06.2012 US 201213538631
(43) Date of publication of application: 01.01.2014
(73) Proprietor: Bell Helicopter Textron Inc., Fort Worth, TX 76101 (US)
(72) Inventor: Ehinger, Ryan T., Irving, TX Texas 75063 (US); Vollmer, Brian S., Grapevine, TX Texas 76051 (US)
(74) Representative: Lawrence, John

(56) References cited:
- FR-A1- 2 685 758
- KR-A- 20050 009 471
- US-A1- 2007 261 922
- US-A1- 2008 302 998
- Shuichi Torii: "Experimental study on convective heat transfer of aqueous suspensions of nano-diamond particles", , 1 January 2007 (2007-01-01), XP055054278, International Symposium on EcoTopia Science 2007 Retrieved from the Internet: URL:http://www.esi.nagoya-u.ac.jp/h/isets0 7/Contents/Session03/1140Torii.pdf [retrieved on 2013-02-22]
- TYLER T ET AL: "Thermal transport properties of diamond-based nanofluids and nanocomposites", DIAMOND AND RELATED MATERIALS, ELSEVIER SCIENCE PUBLISHERS, AMSTERDAM, NL, vol. 15, no. 11-12, 1 November 2006 (2006-11-01), pages 2078-2081, XP028000809, ISSN: 0925-9635, DOI: 10.1016/J.DIAMOND.2006.08.007 [retrieved on 2006-11-01]
- WU ET AL: "Experimental analysis of tribological properties of lubricating oils with nanoparticle additives", WEAR, ELSEVIER SEQUOIA, LAUSANNE, CH, vol. 262, no. 7-8, 20 February 2007 (2007-02-20), pages 819-825, XP005895156, ISSN: 0043-1648, DOI: 10.1016/J.WEAR.2006.08.021
- V. Yu. Dolmatov: "Detonation nanodiamonds in oils and lubricants", Journal of Superhard Materials, vol. 32, no. 1, 1 February 2010 (2010-02-01), pages 14-20, XP055100885, ISSN: 1063-4576, DOI: 10.3103/S1063457610010028

## Description

### TECHNICAL FIELD

This invention relates generally to aircraft gearboxes, and more particularly, to an aircraft gearbox lubrication system.

### BACKGROUND

A helicopter may include one or more rotor systems. One example of a helicopter rotor system is a main rotor system. A main rotor system may generate aerodynamic lift to support the weight of the helicopter in flight and thrust to counteract aerodynamic drag and move the helicopter in forward flight. Another example of a helicopter rotor system is a tail rotor system. A tail rotor system may generate thrust in the same direction as the main rotor system's rotation to counter the torque effect created by the main rotor system. A rotor system may include a gear box that transmits energy from a power source to the rotor blades.

US 2007/0261922 discloses a lubrication system including an additive and a delivery system, in which, when an oil-out condition is detected, the additive is injected mixed with the collected lubricating oil to enhance the characteristics of the lubricating oil and increase the operational time period during an oil-out condition.

Wu et al., in "Experimental analysis of tribological properties of lubricating oils with nanoparticle additives", Wear 262 (2007) 819-825, disclose the use of CuO, TiO₂ and nano-diamond nanoparticles as additives for lubricating oils, resulting in friction reduction and anti-wear properties.

### SUMMARY

In accordance with the invention there is provided a method of designing and making an aircraft lubrication system, as defined by the appended claims.

Particular embodiments of the present disclosure may provide one or more technical advantages. A technical advantage of one embodiment may include the capability to reduce the weight of a gearbox in an aircraft. A technical advantage of one embodiment may also include the capability to reduce the quantity of lubricant used in an aircraft gearbox. A technical advantage of one embodiment may also include the capability to improve gearbox life. A technical advantage of one embodiment may also include the capability to improve gearbox efficiency and performance.

Certain embodiments of the present disclosure may include some, all, or none of the above advantages. One or more other technical advantages may be readily apparent to those skilled in the art from the figures, descriptions, and claims included herein.

### BRIEF DESCRIPTION OF THE DRAWINGS

To provide a more complete understanding of the present invention and the features and advantages thereof, reference is made to the following description taken in conjunction with the accompanying drawings, in which:
**FIGURE 1** shows a helicopter according to one example embodiment;
**FIGURE 2** shows the power train system of the helicopter of FIGURE 1;
**FIGURE 3** shows a lubrication system operable to lubricate the gearbox of FIGURE 2; and
**FIGURE 4** shows a jet of the lubrication system of FIGURE 3 lubricant on a gear tooth of the gearbox of FIGURE 2.

### DETAILED DESCRIPTION OF THE DRAWINGS

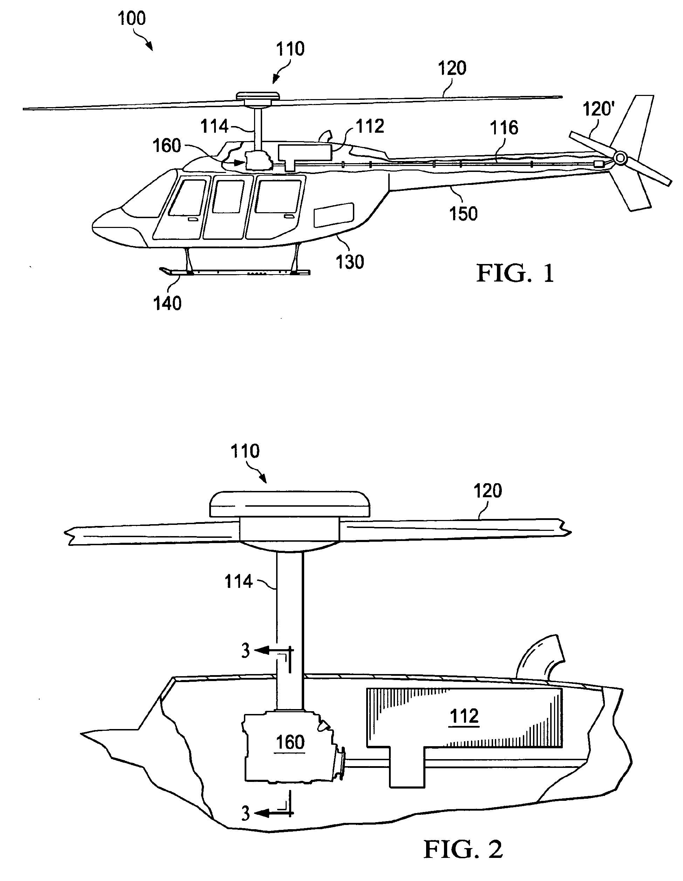

FIGURE 1 shows a helicopter 100 according to one example embodiment. Helicopter 100 features power train system 110, main rotor blades 120, tail rotor blades 120', a fuselage 130, a landing gear 140, and an empennage 150. Power train system 110 may rotate blades 120 and/or blades 120'. FIGURE 2 shows the power train system 110 of FIGURE 1.

In the example of FIGURES 1 and 2, power train system 100 includes an engine 112, a gearbox 114, a main rotor mast 116, and a tail rotor drive shaft 118. Engine 112 supplies torque to main rotor mast 116 via gearbox 114 for rotating of blades 120. Engine 112 also supplies torque to tail rotor drive shaft 118 for rotating blades 120'. In the example of FIGURE 1, gearbox 114 is a main rotor transmission system. Teachings of certain embodiments recognize, however, that power train system 110 may include more or different gearboxes than gearbox 114 shown in FIGURE 1. Power train system 110 may include a control system for selectively controlling the pitch of each blade 120 in order to selectively control direction, thrust, and lift of helicopter 100.

Fuselage 130 represents the body of helicopter 100 and may be coupled to power train system 110 such that power train system 110 and blades 120 may move fuselage 130 through the air. Landing gear 140 supports helicopter 100 when helicopter 100 is landing and/or when helicopter 100 is at rest on the ground. Empennage 150 represents the tail section of the aircraft and features blades 120'. Power train system 110 and blades 120' may collectively provide thrust in the same direction as the rotation of blades 120 so as to counter the torque effect created by blades 120. It should be appreciated that teachings from helicopter 100 may apply to aircraft other than rotorcraft, such as airplanes, tilt rotors, unmanned aircraft, to name a few examples. In addition, teachings of certain embodiments relating to rotor systems described herein may apply to rotor system 110, rotor system 110', and/or other rotor systems, including but not limited to non-helicopter rotor systems.

As stated above, a gearbox may transmit power from a power source (e.g., engine 112) to an object to be moved. A gearbox may convert speed and torque between the power source and the object to be moved. One example of a gearbox may include a variable-speed transmission. A variable-speed transmission is a gearbox that can be "shifted" to dynamically change the speed-to-torque ratio.

A gearbox may include various gears and bearings. A gear is a rotating machine having teeth that mesh with another toothed part in order to transmit torque. Gears in a gearbox may be used to provide speed and torque conversions. A bearing may include any of various machine elements that constrain the relative motion between two or more parts to only the desired motion. Bearings in a gearbox may perform tasks such as supporting a gear shaft.

Gears, bearings, and other mechanical components of a gearbox are subject to wear and heat generation due to contact with other components. These mechanical components may be lubricated to reduce friction and transfer heat away from the components. Lubrication is the process or technique employed to reduce wear of one or both surfaces in close proximity, and moving relative to each other, by interposing a substance (lubricant) between the surfaces to help carry the load (pressure generated) between the opposing surfaces.

A lubricant is a substance introduced to reduce friction between moving surfaces. Examples of lubricants include oil, biolubricants derived from plants and animals, synthetic oils, solid lubricants, and aqueous lubricants. Example transmission oils for gearbox 114 may include oils meeting specifications MIL-PRF-23699 (5cSt), DOD-L-7808 (3-4cSt), DOD-PRF-85734 (5cSt), and other oils in the 9cSt to 10cSt viscosity range.

Additives may improve performance of base lubricants. For example, teachings of certain embodiments recognize that nanodiamond additives may reduce friction and improve heat transfer performance of some base lubricants. Nanodiamonds may originate from a detonation, such as from detonation of an oxygen-deficient explosive mixture of trinitrotoluene (TNT) and Research Department Explosive (RDX). When TNT and RDX are detonated in a closed chamber, the soot that remains may contain small diamonds (e.g., nominally less than ten nanometers in diameter). Nanodiamonds may have a rounded shape that reduces friction by changing "sliding" friction into "rolling" friction. Reducing friction between opposing surfaces may reduce the amount of heat generated by the interaction of the opposing surfaces.

A nanodiamond additive may be added to an existing lubricant to reduce temperatures in an existing mechanical device (e.g., a gearbox). Nanodiamonds may increase the conductivity of the base lubricant while having a somewhat neutral impact on the heat capacity relative to conductivity, thus allowing the fluid to transfer heat more efficiently. In some circumstances, nanodiamond additives may reduce friction by thirty to fifty percent and may improve heat conductivity by twelve percent.

In high-temperature environments, such as a truck or train engine, nanodiamond additives may be added to lubricant in an existing engine to improve engine performance. Of course, nanodiamond additives increase lubrication costs; thus, nanodiamond additives would normally not be used where wear and efficiency is not a critical design criteria.

Teachings of certain embodiments recognize, however, the ability to build smaller and lighter mechanical devices to take advantage of the improved friction and heat-transfer properties of nanodiamond additives. In the aerospace industry, weight may be an important design criterion. Teachings of certain embodiments recognize that a lubrication system may achieve the same heat-reduction goals while using less volume of lubricant by adding nanodiamond additives to a lubricant. Reducing the volume of lubricant can result in a significant weight savings because the aircraft can carry less lubricant. In addition, aircraft designers can reduce the size of various lubrication system components (e.g., pump, sump, filter, cooler) because the lubrication system components have a smaller workload due to the reduced volume of lubricant.

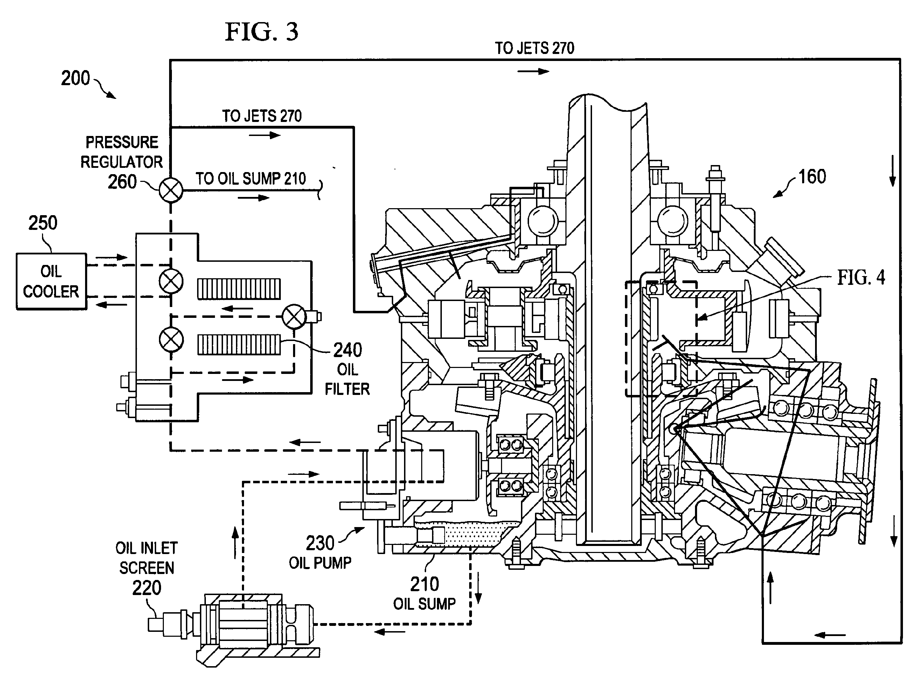

FIGURE 3 shows a lubrication system 200 according to one example embodiment. Lubrication system 200 features a lubricant sump 210, a lubricant inlet screen 220, a pump 230, a filter 240, a lubricant cooler 250, a pressure regulator 260, and jets 270. Other embodiments of lubrication system 200 may contain more, fewer, or different components. Embodiments of lubrication system 200 may be pressurized or unpressurized. For example, jets 270 may dispense either pressurized or unpressurized lubricant on a part.

Lubricant sump 210 is a reservoir that stores lubricant within lubrication system 200. Sump 210 may be integral with the housing of gearbox 160 (as shown in FIGURE 3) or separate from the housing of gearbox 160. Lubricant inlet screen 220 is a filter that prevents removes the largest particulates from the lubricant. Pump 230 circulates lubricant under pressure throughout lubrication system 200. Filter 240 removes some contaminants from the lubricant. Lubricant cooler 250 lowers the temperature of the lubricant before the lubricant is applied to the various components that generate heat. Pressure regulator 260 measures the lubricant pressure within lubrication system 200 and diverts excess lubricant back to lubricant sump 210 if the lubricant pressure is too high. Jets 270 dispense lubricant on components of gearbox 160 that are subject to friction and/or generate heat, such as gears and bearings.

Lubricant in lubrication system 200 may include a nanodiamond additive, as described above. The amount of nanodiamond additive in the lubricant may vary in different embodiments. As more nanodiamond additive is added to the lubricant, thermal conductivity may increase, but cost and viscosity also may increase. Teachings of certain embodiments recognize that the negative attributes of having excess nanodiamond additive may be limited if the nanodiamond additive is between 0.005 and 0.3 percent of the weight of the nanodiamond lubricant.

Teachings of certain embodiments recognize that lubrication system 200 may decrease the amount of lubricant used if the lubricant includes nanodiamond additive. For example, if nanodiamonds decrease friction by thirty to fifty percent, lubrication system 200 may use thirty to fifty percent less lubricant to remove the required heat. For example, jets 270 may dispense thirty to fifty percent less lubricant on a gear or bearing if the lubricant contains a nanodiamond additive.

By decreasing the amount of lubricant used in lubrication system 200, the sizes of sump 210, pump 230, filter 240, cooler 250, and jets 270 may also be reduced. For example, sump 210 may be smaller to hold less lubricant, and pump 230 may be smaller because it has less lubricant to pressurize and/or move. Thus, teachings of certain embodiments recognize the ability to reduce the weight of lubrication system 200 by reducing both the volume of lubricant used and by reducing the physical components within lubrication system 200 that process the lubricant. For example, in some embodiments, reducing the volume of lubricant may save four to seven pounds on smaller aircraft and eleven to seventeen pounds on larger aircraft.

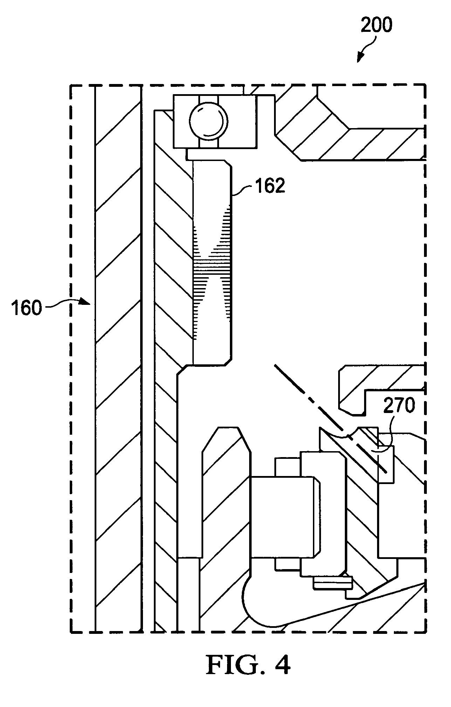

FIGURE 4 shows a jet of lubrication system 200 dispensing nanodiamond lubricant on a gear tooth of gearbox 160. As shown in FIGURE 4, jet 270 dispenses nanodiamond lubricant on gear tooth 162. Teachings of certain embodiments recognize that jet 270 may dispense less lubricant if the lubricant contains a nanodiamond additive. In addition, teachings of certain embodiments recognize that gear tooth 162 may be configured to transmit more power and operate under a higher scoring temperature limit because nanodiamond lubricant may transfer heat away from gear tooth 162 more effectively than a base lubricant without a nanodiamond additive.

Modifications, additions, or omissions may be made to the systems and apparatuses described herein without departing from the scope of the invention. The components of the systems and apparatuses may be integrated or separated. Moreover, the operations of the systems and apparatuses may be performed by more, fewer, or other components. The methods may include more, fewer, or other steps. Additionally, steps may be performed in any suitable order.

Although several embodiments have been illustrated and described in detail, it will be recognized that substitutions and alterations are possible without departing from the scope of the present invention, as defined by the appended claims.

## Claims

1. A method of designing and making an aircraft gearbox lubrication system (200), the aircraft gearbox lubrication system comprising:
a lubricant source (210) containing a lubricant, the lubricant comprising a base lubricant and an additive;
a pump (230) in fluid communication with the lubricant source (210) and configured to provide a flow of the lubricant from the lubricant source (210);
a dispenser (270) in fluid communication with the lubricant source (210) and configured to allow the lubricant to flow from the pump (230) onto a component in a gearbox (160) at a predetermined rate; and
wherein the lubricant is a nanodiamond lubricant, wherein the additive is a nanodiamond additive; and wherein the lubricant source contains a volume of lubricant selected in reliance on an enhanced lubrication property of the nanodiamond lubricant, relative to the base lubricant;
wherein the method comprises designing the aircraft gearbox lubrication system to have reduced weight by reducing a volume of the lubricant by taking advantage of improved friction and heat transfer properties of nanodiamond additives included in the lubricant.

2. The method of claim 1, further comprising reducing the size of at least one of:
the pump, the lubrication source, a filter; or a cooler.

## Patentansprüche

1. Verfahren zur Konstruktion und Herstellung eines Flugzeuggetriebeschmiersystems (200), wobei das Flugzeuggetriebeschmiersystem umfasst:
eine Schmiermittelquelle (210), die ein Schmiermittel enthält, wobei das Schmiermittel ein Basisschmiermittel und einen Zusatz umfasst;
eine Pumpe (230), die mit der Schmiermittelquelle (210) in Fluidverbindung steht und die dafür ausgelegt ist, einen Schmiermittelstrom aus der Schmiermittelquelle (210) zu fördern;
eine Abgabeeinrichtung (270), die mit der Schmiermittelquelle (210) in Fluidverbindung steht und die dafür ausgelegt ist, den Schmiermittelstrom mit einer vorgegebenen Rate von der Pumpe (230) auf eine Komponente in einem Getriebe (160) fließen zu lassen; und
wobei das Schmiermittel ein Nanodiamantschmiermittel ist, wobei der Zusatz ein Nanodiamantzusatz ist; und wobei die Schmiermittelquelle ein Schmiermittelvolumen enthält, das auf Basis einer gegenüber dem Basisschmiermittel verbesserten Schmiereigenschaft des Nanodiamantschmiermittels ausgewählt wird;
wobei das Verfahren umfasst, dass das Flugzeuggetriebeschmiersystem durch Verringern eines Volumens des Schmiermittels unter Ausnutzung verbesserter Reibungs- und Wärmeübertragungseigenschaften von Nanodiamantzusätzen, die in dem Schmiermittel enthalten sind, auf solche Weise konstruiert wird, dass es ein verringertes Gewicht aufweist.

2. Verfahren nach Anspruch 1, ferner das Verkleinern mindestens einer der folgenden Komponenten umfassend:
der Pumpe, der Schmiermittelquelle, eines Filters oder einer Kühleinrichtung.

## Revendications

1. Un procédé de conception et de fabrication d'un système de lubrification de boîte à engrenages d'aéronef (200), le système de lubrification de boîte à engrenages d'aéronef comprenant:
une source de lubrifiant (210) contenant un lubrifiant, le lubrifiant contenant un lubrifiant de base et un additif,
une pompe (230) en communication fluidique avec la source de lubrifiant (210) et configurée de façon à fournir un écoulement du lubrifiant à partir de la source de lubrifiant (210),
un distributeur (270) en communication fluidique avec la source de lubrifiant (210) et configuré de façon à permettre au lubrifiant de s'écouler de la pompe (230) vers un composant dans une boîte à engrenages (160) à une vitesse prédéterminée, et
où le lubrifiant est un lubrifiant à base de nanodiamants, où l'additif est un additif à base de nanodiamants et où la source de lubrifiant contient un volume de lubrifiant sélectionné en fonction d'une propriété de lubrification améliorée du lubrifiant à base de nanodiamants par rapport au lubrifiant de base,
où le procédé comprend la conception du système de lubrification de boîte à engrenages d'aéronef de façon à présenter un poids réduit par la réduction d'un volume du lubrifiant en tirant profit de propriétés améliorées de frottement et de transfert thermique des additifs à base de nanodiamants contenus dans le lubrifiant.

2. Le procédé selon la Revendication 1, comprenant en outre la réduction de la taille d'au moins un élément parmi:
la pompe, la source de lubrification, un filtre ou un refroidisseur.
